# EUROPEAN PATENT SPECIFICATION

(11) **EP 0 838 514 B1**
(45) Date of publication and mention of the grant of the patent: **12.11.2003**
(21) Application number: 97122270.8
(22) Date of filing: 01.07.1994
(51) Int. Cl.: C09K 7/02

(54) **Drilling fluid additive and method for inhibiting hydration**
Bohrspüladditive und Verfahren zur Hydratationsbeschleunigung
Additif pour fluide de forage et méthode pour inhiber l'hydratation

(30) Priority: 02.07.1993 US 87458; 06.07.1993 US 86739
(43) Date of publication of application: 29.04.1998
(62) Divisional of application: 94110290.7
(73) Proprietor: M-I L.L.C., Houston, Texas 77072 (US)
(72) Inventor: Patel, Arvind D., Houston, Texas 77083 (US); McLaurine, Henry C., The Woodlands, Texas 77381 (US); Stamatakis, Emanuel, Houston, Texas 77082 (US); Thaemlitz, Carl J., Katy, Texas 77493 (US)
(74) Representative: Ricker, Mathias, Dr. Dipl.-Chem.

(56) References cited:
- EP-A- 0 125 957
- CA-A- 2 088 344
- US-A- 4 842 073
- US-A- 5 089 151
- US-A- 5 099 923

## Description

The invention relates to drilling fluids which suppress clay swelling within a subterranean well during the drilling process. The invention is particularly directed to hydration-inhibiting drilling fluids comprising hydroxyalkyl quaternary ammonium compounds which are compatible with anionic polymers typically found in or added to drilling fluids and are environmentally acceptable.

In rotary drilling of subterranean wells numerous functions and characteristics are expected of a drilling fluid. A drilling fluid should circulate throughout the well and carry cuttings from beneath the bit, transport the cuttings up the annulus, and allow their separation at the surface. At the same time, the drilling fluid is expected to cool and clean the drill bit, reduce friction between the drill string and the sides of the hole, and maintain stability in the borehole's uncased sections. The drilling fluid should also form a thin, low-permeability filter cake that seals openings in formations penetrated by the bit and act to reduce the unwanted influx of formation fluids from permeable rocks.

Drilling fluids are typically classified according to their base material or primary continuous phase. In oil-base fluids, solid particles are suspended in oil, and water or brine may be emulsified with the oil. The oil is typically the continuous phase. In water-base fluids, solid particles are suspended in water or brine, and oil may be emulsified in the water. Water is the continuous phase. Oil-base fluids are generally more effective in stabilizing water-sensitive shales than water-base fluids. However, environmental concerns have limited the use of oil-base drilling fluids. Accordingly, oil drilling companies have increasingly focused on water-base fluids.

Three types of solids are usually found in water-base drilling fluids: (1) clays and organic colloids added to provide necessary viscosity and filtration properties, (2) heavy minerals whose function is to increase the drilling fluid's density, and (3) formation solids that become dispersed in the drilling fluid during the drilling operation.

The formation solids that become dispersed in a drilling fluid are typically the cuttings produced by the drill bit's action and the solids produced by borehole instability. Where the formation solids are clay minerals that swell, the presence of such solids in the drilling fluid can greatly increase drilling time and costs. The overall increase in bulk volume accompanying clay swelling impedes removal of cuttings from beneath the drill bit, increases friction between the drill string and the sides of the borehole, and inhibits formation of the thin filter cake that seals formations. Clay swelling can also create other drilling problems such as loss of circulation or pipe sticking that can slow drilling and increase the drilling costs.

In the North Sea and the United States gulf coast areas, drillers commonly encounter argillaceous sediments in which the predominant clay mineral is montmorillonite (commonly called "gumbo shale"). Gumbo shale is notorious for its swelling. Thus, given the frequency in which gumbo shale is encountered in drilling subterranean wells, the development of a substance and method for reducing clay swelling has long been a goal of the oil and gas exploration industry.

The mechanisms of clay swelling are well known. Clay minerals are crystalline in nature. The structure of a clay's crystal determines its properties. Typically, clays have a flaky, mica-type structure. Clay flakes are made up of a number of crystal platelets stacked face-to-face. Each platelet is called a unit layer, and the surfaces of the unit layer are called basal surfaces.

A unit layer is composed of multiple sheets. One sheet is called the octahedral sheet, and is composed of either aluminum or magnesium atoms octahedrally coordinated with the oxygen atoms of hydroxyls. Another sheet is called the tetrahedral sheet. The tetrahedral sheet consists of silicon atoms tetrahedrally coordinated with oxygen atoms.

Sheets within a unit layer link together by sharing oxygen atoms. When this linking occurs between one octahedral and one tetrahedral sheet, one basal surface consists of exposed oxygen atoms while the other basal surface has exposed hydroxyls. It is also quite common for two tetrahedral sheets to bond with one octahedral sheet by sharing oxygen atoms. The resulting structure, known as the Hoffman structure, has an octahedral sheet that is sandwiched between the two tetrahedral sheets. As a result, both basal surfaces in a Hoffman structure are composed of exposed oxygen atoms.

The unit layers stack together face-to-face and are held in place by weak attractive forces. The distance between corresponding planes in adjacent unit layers is called the c-spacing. A clay crystal structure with a unit layer consisting of three sheets typically has a c-spacing of about 9.5 x 10⁻⁷ mm.

In clay mineral crystals, atoms having different valences commonly will be positioned within the sheets of the structure to create a negative potential at the crystal surface. In that case, a cation is adsorbed on the surface. These adsorbed cations are called exchangeable cations because they can trade places with other cations when the clay crystal is in water. In addition, ions can also be adsorbed on the clay crystal edges and exchanged with other ions in the water.

The type of substitutions occurring within the clay crystal structure and the exchangeable cations adsorbed on the crystal surface greatly affect clay swelling, a property of primary importance in the drilling fluid industry. Clay swelling is a phenomenon in which water molecules surround a clay crystal structure and position themselves to increase the structure's c-spacing. Two types of swelling can occur.

Surface hydration is one type of swelling in which water molecules are adsorbed on crystal surfaces. Hydrogen bonding holds a layer of water molecules to the oxygen atoms exposed on the crystal surfaces. Subsequent layers of water molecules then line up to form a quasi-crystalline structure between unit layers which results in an increased c-spacing. All types of clays swell in this manner.

Osmotic swelling is a second type of swelling. Where the concentration of cations between unit layers in a clay mineral is higher than the cation concentration in the surrounding water, water is drawn between the unit layers and the c-spacing is increased. Osmotic swelling results in larger overall volume increases than surface hydration. However, only certain clays, like sodium montmorillonite, swell in this manner.

Exchangeable cations found in clay minerals greatly impact the amount of swelling that takes place. The exchangeable cations compete with water molecules for the available reactive sites in the clay structure. Generally, cations with high valences are more strongly adsorbed than ones with low valences. Thus, clays with low valence exchangeable cations will swell more than clays whose exchangeable cations have high valences. Calcium and sodium cations are the most common exchangeable cations in gumbo shale. As the sodium cation has a low valence, it easily disperses into water, thereby giving gumbo shale its notorious swelling characteristics.

Although a number of compounds are known for their effectiveness in inhibiting reactive shale formations, several factors affect the practicality of using swelling inhibitor additives in drilling fluids. First, the inhibitor must be compatible with the other drilling fluid components. The driller of subterranean wells must be able to control the rheological properties of drilling fluids by using additives such as bentonite, anionic polymers and weighting agents. Thus, drilling fluid additives should also provide desirable results but should not inhibit the desired performance of other additives. However, many swelling inhibitors will react with other drilling fluid components, resulting in severe flocculation or precipitation.

Second, current drilling fluid components must be environmentally acceptable. As drilling operations impact on plant and animal life, drilling fluid additives should have low toxicity levels and should be easy to handle and to use to minimize the dangers of environmental pollution and harm to personnel. Moreover, in the oil and gas industry today, it is desirable that additives work both onshore and offshore and in fresh and salt water environments.

Numerous attempts have been made to improve the shale inhibition of water-base drilling fluids. One method to reduce clay swelling is to use inorganic salts in drilling fluids, such as potassium chloride and calcium chloride. Other methods examined for controlling clay swelling have centered on the use of water soluble polymers in drilling fluids. Since they adsorb on the surfaces of clays when included in drilling fluids, these polymers compete with water molecules for the reactive sites on clays and thus serve to reduce clay swelling. These polymers can be either cationic, anionic, or nonionic. Cationic polymers dissociate into organic cations and inorganic anions, while anionic polymers dissociate into inorganic cations and organic anions. Nonionic polymers do not dissociate. Cationic polymers have proven to be generally more effective shale inhibitors than either anionic or nonionic polymers.

Several cationic polymer systems for water-base fluids have been proposed. One system, a brine-base system, examined two dialkyldimethyl quaternary ammonium salts (dialkyl quats) of the following general formula: 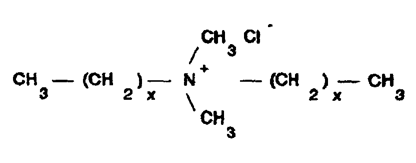 wherein x=10 or 16. Although the shorter chain dialkyl quat (x=10) was more effective in inhibiting shale than the longer chain dialkyl quat (x=16), the tests indicated that the ability of the dialkyl quats to inhibit shale appeared to be hindered by their limited solubility in water.

Another attempt examined three trimethylalkyl ammonium chlorides (mono alkyl quats) of the following general formula: 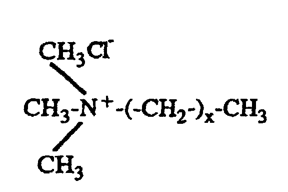 wherein x=10, 14, or 16.

The alkyl quat with the shortest chain (x=10) showed the best shale inhibition. However, drilling fluids formulated using the alkyl quat in conjunction with potassium chloride in a drilling fluid formulation generated large amounts of foam. Consequently, the three alkyl quats were judged unsuitable for use in drilling.

Based on the failure of brine-base systems employing potassium chloride and quaternary compounds, alternative cationic polymers were evaluated. Cationic polymers were again used in conjunction with potassium chloride. The brine-base system employed potassium chloride and three additional quaternized polymers having the following general formulas:

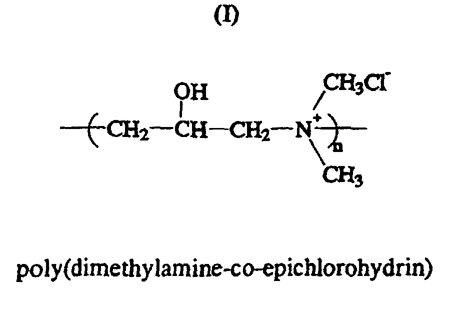

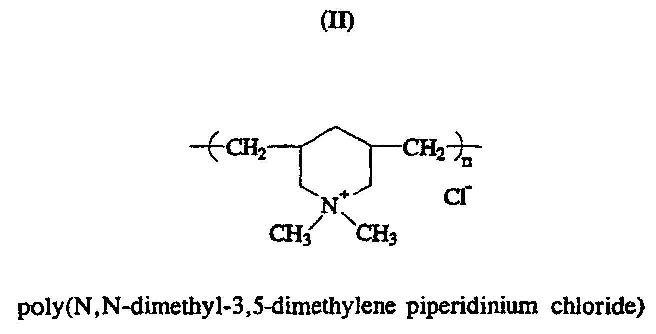

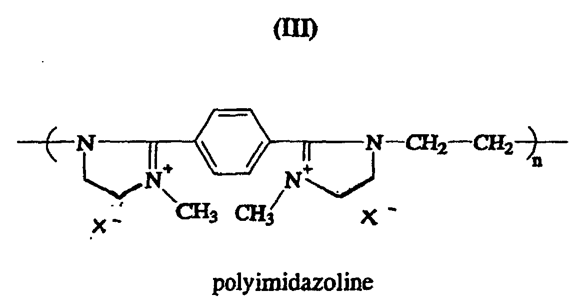

A Formula I category polymer exhibited the best shale inhibition. A drilling fluid formula was prepared using conventional viscosifiers, fluid loss additives, the shale inhibitor of formula I and potassium chloride. The cationic polymer was found to be incompatible with the conventional anionic additives, i.e., bentonite, xanthan gum, carboxymethylcellulose (CMC), polyacrylates, etc. A non-ionic viscosifier, hydroxyethylcellulose, and a non-ionic fluid loss agent, pregelatinized starch, were used as substitutes to overcome the incompatibility problem. Further details regarding the brine-base systems described above are reported in Beihoffer et al., "The Development of an Inhibitive Cationic Drilling Fluid for Slim-Hole Coring Applications," SPE-19953 presented at the 1990 SPE/IADC Drilling Conference held in Houston, Feb. 27-March 2, 1990.

Although the described cationic polymers are effective shale inhibitors, the incompatibility of the polymers with common anionic drilling fluid additives is a disadvantage. Moreover, these cationic polymers are toxic. Since environmental concerns are of ever increasing importance, a search for compatible cationic polymers having low toxicity has resulted.

One effort identified two cationic polymers having low toxicity and good shale inhibition when used together. The first polymer is a high molecular weight cationic polyacrylamide. The second polymer is a quaternary polyamine. In the drilling fluid formulation, the high molecular weight polyacrylamide was used for shale encapsulation, and the low molecular weight polyamine was used for swelling suppression. Although the two polymers had low toxicity, they were totally incompatible with anionic polymers in fresh water. Adding salts, such as sodium chloride, to increase the ionic concentration, alleviated the precipitation problem. However, the polymers also caused flocculation of the bentonite component of the drilling fluid. This problem was corrected by adding polyvinyl alcohol to the formulation as a deflocculant. Additional details of the described system, including toxicity tests and additional background on water adsorption and shale inhibition are in Retz, et al., "An Environmentally Acceptable and Field-Practical, Cationic Polymer Mud System," SPE-23064 presented at the Offshore Europe Conference held in Aberdeen, September 3-6, 1991.

Although research has identified cationic polymers which are effective shale inhibitors for use as drilling fluid additives, other cationic polymers with improved compatibility and low toxicity are desired.

A variety of fluids are used during and after drilling operations in subterranean earth formations. A clear distinction is drawn in the drilling fluids art between fluids that are actively used during drilling operations and fluids that are used after drilling operations. One type of fluid used after drilling operations is referred to as a fracturing fluid. Fracturing fluids are materials injected into the producing portion of a well formation in order to "fracture" the formation in which the hydrocarbons are maintained to permit ease of flow and ultimate removal. Such fracturing fluids are taught by U.S. Patents 5,089,151 and 5,097,904. Notably, the fracturing fluids typical in the oil well drilling industry do not include any of additives that are typically found in drilling fluids. In particular, drilling fluid characteristics such as toxicity and compatibility with anionic materials are not important to a fracturing fluid. Weight materials are not incorporated into fracturing fluids as they are in drilling fluids.

The present invention relates to drilling fluids for reducing the problems associated with clays which swell in the presence of water, said drilling fluids of the invention comprising a drilling fluid additive. A particular advantage of the drilling fluids of the present invention is that they comprise drilling fluid additives exhibiting a compatibility with common anionic drilling fluid components and a low toxicity.

Generally, the additives of one embodiment of the invention are mono (meric) quaternary alkylamines, which are the reaction products of (I) a tertiary alkylamine of the following formula: 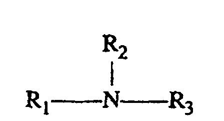 wherein R₁ and R₂ are methyl groups, and R₃ is a hydroxy ethyl group; and (2) an alkyl halide of the following general formula:

R-X

wherein R is a methyl group and X is a halogen selected from chlorine, bromine, iodine, or combinations thereof.

The reaction products are believed to be quaternary alkyl amines having the following general structure: 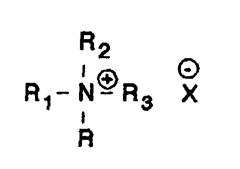 wherein R₁, R₂, R₃, R and X are defined as above.

The drilling fluids of this invention have special utility in the drilling fluids art, because they are both non-toxic and compatible with anionic drilling fluid components within commercially acceptable parameters. For purposes of this application, a compound should be understood to exhibit "low toxicity" when it possesses an LC₅₀ value of greater than 30,000 in the Mysid shrimp test prescribed by the U.S. Environmental Protection Agency for offshore drilling discharges. Likewise, a compound is considered compatible with anionic drilling fluid components when it fails to yield a precipitant in the presence of anionic polymers.

The present invention relates to drilling fluids for reducing the downhole problems associated with clays which swell in the presence of water, said drilling fluids comprising a drilling fluid additive. A particular advantage of the drilling fluids of the present invention is that they comprise drilling fluid additives exhibiting a low toxicity and a compatibility with common anionic drilling fluid components.

Generally, the additives of the drilling fluids are monoquaternary hydroxyalkylalkylamines. compounds are those which are the reaction product of a hydroxyalkyl tertiary amine and an alkyl halide obtained by reacting the compounds according to the following general reaction: 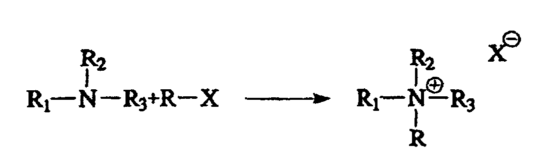 Wherein R₁ and R₂ are methyl groups, R₃ is a hydroxyethyl group, R is a methyl group, and X is a halogen selected from chlorine, bromine, iodine, or combinations thereof.

The tertiary hydroxyalkylamine is dimethylethanolamine. Especially preferred resulting quaternary amines to be used as an additive to drilling fluids are the products resulting from the reaction of dimethylethanolamine and methyl chloride, the product being quaternary trimethylethanolamine chloride, also commonly known as choline chloride. Choline chloride can also be made by reacting trimethylamine and chlorohydrin or ethylene oxide followed by neutralization with hydrochloric acid. The methods of synthesis are well known to those who are skilled in the art.

Quaternary amines are generically referred to as quaternary ammonium compounds. Specific information on the formulation and synthesis of quaternary amines and related materials is found in Kirk-Othmer, Encyclopedia of Chemical Technology, third edition, volume 19, pages 521-531. Additional information is found in L. D. Metcalfe, R. J. Martin, and A. A. Schmitz, J. Am. Oil Chemical Society, 43, 355 (1966).

Quaternary ammonium compounds are tetrasubstituted ammonium salts. In all cases, the nitrogen atom is in the positively charged portion of the molecule.

The methods of preparation of quaternary ammonium compounds are many and varied, depending on the structure desired for the final compound. The most convenient reaction is one in which a suitable tertiary amine reacts with an alkylating agent, which can be an alkyl halide. 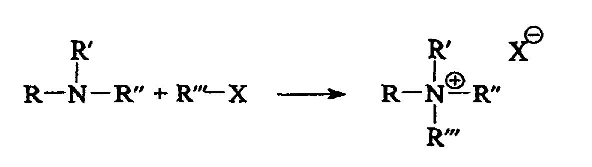 There are many variations in the final product because of the large number of diverse starting amines and alkylating agents.

Quaternary ammonium compounds are usually prepared in stainless steel or glass-lined equipment. The amine and solvent, e.g., isopropyl alcohol, water, or both, are loaded into the reactor and heated to the proper temperature (usually 80-100°C), and then the alkylating reagent is added. Quaternization of tertiary amines with alkyl halides is bimolecular. The rate of reaction is influenced by a number of factors, including basicity of the amine, steric effects, reactivity of the halide, and the polarity of the solvent. Polar solvents promote the reactions by stabilizing the ionic intermediates and products.

Methods of preparing quaternary amines are well known to those having ordinary skill in the art. In general, effective quaternary amines can be formed by heating the hydroxyalkylamine and alkyl halide, or other water-soluble quaternary amine compound to temperatures up to 120°C, preferably between 65°C and 120°C. The reactants are maintained at the desired temperature up to 10 hours, and preferably from 2 to 10 hours, or until the reaction is completed. Generally, the reaction is complete when the tertiary amine value is approximately zero. This point can be determined by appropriate analytical techniques.

The additives are comprised in the drilling fluids of the invention in concentrations sufficient to deal with the clay swelling problems at hand. Concentrations between 0.5 pounds per barrel (ppb) and 10 ppb are generally contemplated and are considered to be functionally effective. However, in some situations, much higher concentrations might be desirable for controlling swelling clays in underground formations.

It is essential that the drilling fluid ultimately selected and formulated for use in any particular well application be appropriate for the conditions of the well. Therefore, although the base ingredients remain the same, i.e., salt or fresh water and the drilling fluid additives, other components can be added.

Specifically, materials generically referred to as gelling materials, thinners, fluid loss control agents, and weight materials are typically added to water base drilling fluid formulations. Of these additional materials, each can be added to the formulation in a concentration as rheologically and functionally required by drilling conditions. Typical gelling materials used in aqueous based drilling fluids are bentonite, sepiolite, and attapulgite clays and anionic high-molecular weight, water-soluble polymers such as partially hydrolyzed polyacrylamides.

The drilling fluids of the present invention also comprise a weight material. Materials that have demonstrated utility as weight materials include Galena (PbS), Hematite (Fe₂O₃), Magnetite (Fe₃O₄), iron oxide (Fe₂O₃) (manufactured), Illmenite (FeO · TiO₂), Barite (BaSO₄), Siderite (FeCO₃), Celestite (SrSO₄), Dolomite (CaCO₃ MgCO₃), and Calcite (CaCO₃). The weight material is added to the drilling fluid in a functionally effective amount largely dependent on the nature of the formation being drilled. Weight materials are typically present only in drilling fluids and are not generally found in well treatment and stimulation fluids such as fracturing fluids. In fracturing fluids the use of weight materials is specifically avoided for functional reasons.

Similarly, it has been found beneficial to add lignosulfonates as thinners for water-base drilling fluids. Typically lignosulfonates, modified lignosulfonates, polyphosphates and tannins are added. In other embodiments, low molecular weight polyacrylates can also be added as thinners. Thinners are added to a drilling fluid to reduce flow resistance and control gelation tendencies. Other functions performed by thinners include reducing filtration and cake thickness, counteracting the effects of salts, minimizing the effects of water on the formations drilled, emulsifying oil in water, and stabilizing mud properties at elevated temperatures.

As mentioned previously, the drilling fluid of this invention contains a weight material. The quantity depends upon the desired density of the final composition. The most preferred weight materials include, but are not limited to, barite, hematite calcium carbonate, magnesium carbonate and the like.

Finally, anionic fluid loss control agents such as modified lignite, polymers, modified starches and modified celluloses can be added to the water base drilling fluid of this invention.

As indicated, the additives comprised in the drilling fluids of the invention are selected to have low toxicity and to be compatible with common anionic drilling fluid additives such as polyanionic carboxymethylcellulose (PAC or CMC), polyacrylates, partially-hydrolyzed polyacrylamides (PHPA), lignosulfonates, xanthan gum, etc.

Several embodiments were prepared for use in the following examples. The several samples of condensates were prepared using various catalysts, as noted.

Triethanolaminemethyl chloride was prepared by mixing 60 g of triethanolamine with 20 g of distilled water. 20 g of methyl chloride was then added to the solution. The solution was heated at about 65°C for approximately 6 hours. Upon completion of the reaction the excess methyl chloride was evaporated. The reaction product is believed to be as follows:

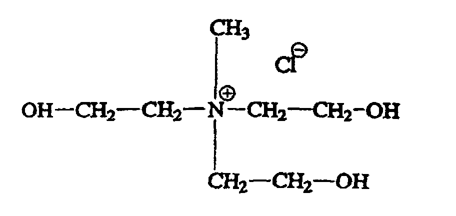

In an alternative embodiment, an improved drilling fluid additive was formed by reacting triethanolamine with N,N,N-trimethyl-2-hydroxy-3-chloropropane ammonium chloride to form a water-soluble diquat. The reaction was conducted generally according to the procedure set forth above for the preparation of the triethanolaminemethyl chloride. The reactants have the following formulas: 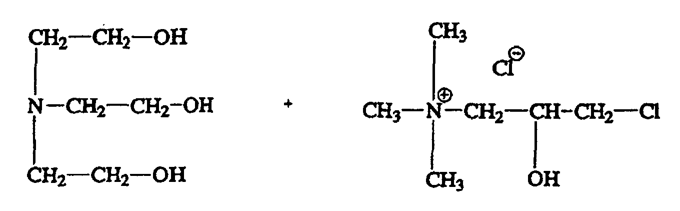 The resulting product is believed to have the following structure:

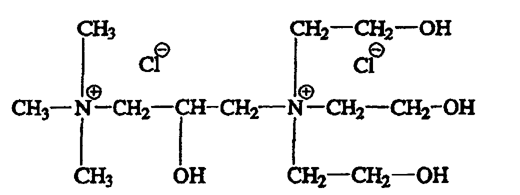

Condensates of triethanolamine were prepared using various catalysts, followed by quaternization of the condensates. In general, the condensate samples were prepared by mixing 200 g of triethanolamine with 1 to 10% of the catalyst by weight. The catalysts employed in preparing the samples were sodium hydroxide, zinc chloride, and calcium chloride.

Generally, the mixtures were heated between 100°C to 250°C for several hours until the desired condensation was achieved. The condensation water was distilled off during the reaction. The triethanolamine condensates were then quaternized according to the procedure set forth for the preparation of the triethanolaminemethyl chloride described above.

The following table summarizes the samples discussed in the following examples.

**TABLE 1**

| **SAMPLE #** | **COMPOUND** |
|---|---|
| 1 (Comparative) | triethanolaminemethyl chloride |
| 2 - 7 (Comparative) | triethanolaminemethyl chloride condensates |
| 8 (Comparative) | 2-hydroxy-N,N,N-tri-methyl-N',N',N'-tris(2-hydroxyethyl)- 1,3-propane diammonium dichloride |
| 9 | hydroxyethyltrimethyl ammonium chloride |

The following table summarizes the viscosities of the triethanolamine condensates and the catalysts used in the preparation of samples 2-7 (Comparative).

**TABLE 2**

| SAMPLE | VISCOSITY(CPS) | CATALYST |
|---|---|---|
| 2 | 10,500 | NaOH |
| 3 | 20,000 | CaCl₂ |
| 4 | 12,500 | ZnCl₂ |
| 5 | 30,000 | CaCl₂ |
| 6 | 20,000 | NaOH |
| 7 | 80,000 | CaCl₂ |

The viscosities indicated in Table 2 are for the triethanolamine condensates prior to quaternization with methyl chloride.

The following examples are submitted for the purpose of illustrating the toxicity and performance characteristics of the present quaternized trihydroxyalkylamines and condensates thereof. The tests were conducted in accordance with the procedures in API Bulletin RP 13B-2, 1990. The following abbreviations are sometimes used in describing the results discussed in the examples:
"PV" is plastic viscosity which is one variable used in the calculation of viscosity characteristics of a drilling fluid.
"YP" is yield point which is another variable used in the calculation of viscosity characteristics of drilling fluids.
"GELS" is a measure of the suspending characteristics and the thixotropic properties of a drilling fluid.
"F/L" is API fluid loss and is a measure of fluid loss (in ml) of drilling fluid at 100 psi (690 kPa).

### Example 1

Test results indicate that significant reductions in clay swelling can beobtained by adding the trihydroxyalkyl quaternary amines of the present invention to drilling fluids. The following experiment shows the inhibition of bentonite clay. The reduction in yield point and viscosity indicates inhibition of the clay.

The experiment was carried out by adding 8 g of the test sample to 330 ml of distilled water. 50 g of API monogram bentonite clay were then added to the solution and the mixture was sheared for 30 minutes in a Hamilton Beach mixer. The rheology was measured with a viscosity meter according to the API procedure described above. The control contained only the bentonite clay and distilled water. The results are summarized below in Table 3.

**TABLE 3**

| Rheology @ 75 F. | | | |
|---|---|---|---|
| RPM | Sample 1* | Sample 6* | Control |
| 600 | 12 | 10 | 300 |
| 300 | 8 | 6 | 290 |
| 200 | 6 | 5 | --- |
| 100 | 4 | 4 | --- |
| 6 | 3 | 2 | --- |
| 3 | 3 | 2 | --- |
| PV/YP | 4/4 | 4/2 | 10/280 |

| | | | |
|---|---|---|---|
| * (Comparative) | | | |

### Example 2

Samples of the additives comprised in the drilling fluids were also tested for compatibility with common anionic drilling fluid components. A 1-2% solution of anionic polymers (PAC LV - low viscosity sodium carboxymethylcellulose and PHPA - partially hydrolyzed polyacrylamide) were prepared in distilled water. 30% aqueous solutions of the above additives were added to the polymer solutions. The precipitation of the anionic polymers from the solution indicated non-compatibility of the samples with anionic polymers. The results of the experiment are summarized in the following table.

**TABLE 4**

| SAMPLE | COMPATIBILITY (PAC LV) | COMPATIBILITY (PHPA) |
|---|---|---|
| 1* | YES | YES |
| 2* | YES | YES |
| 3* | NO | NO |
| 4* | NO | NO |
| 5* | NO | NO |
| 6* | YES | YES |
| 7* | NO | NO |
| 8* | YES | YES |
| 9 | YES | YES |

| | | |
|---|---|---|
| * (Comparative) | | |

Note that samples 2 and 6, polymers condensed employing the sodium hydroxide catalyst, showed compatibility with anionic drilling fluid components. The acid-catalyzed polymer samples 3, 4, 5, and 7 were incompatible with anionic components. Having identified this characteristic in the preparation of the polymers, those with ordinary skill in the art can identify, by routine screening, other suitable catalysts which produce the condensed trihydroxyalkyl quaternary amines having the characteristic of compatibility with anionic polymers.

### Example 3

Testing was conducted to assess the toxicity levels associated with using samples 1-9. The United States Environmental Protection Agency has specified a Mysid shrimp bioassay as the means for assessing marine aquatic toxicity of drilling fluids. A detailed account of the procedure for measuring toxicity of drilling fluids is described in Duke, T.W., Parrish, P.R.; "Acute Toxicity of Eight Laboratory Prepared Generic Drilling Fluids to Mysids (Mysidopsis)" 1984 EPA-600/3-84-067.

For purposes of understanding the term "low toxicity" within the context of this application, the term refers to drilling fluid with an LC₅₀ of greater than 30,000 ppm by the Mysid shrimp test. Although 30,000 has been the number used for purposes of evaluation it should not be considered a limitation on the scope of this invention. Rather, the tests provide a context for the use of the term "low toxicity" as used in the present invention which will be readily understood by those with ordinary skill in the art. Other LC₅₀ values may be viable in various environmental settings. An LC₅₀ value of greater than 30,000 has been equated to an "environmentally compatible" product. Each sample was tested for toxicity at a concentration of 5 lbs/bbl in Generic Mud # 7. The results of the 96 hour toxicity tests are provided below.

**TABLE 5**

| SAMPLE | LC₅₀ (96 HOURS) |
|---|---|
| 1* | > 1,000,000 ppm |
| 2* | > 1,000,000 ppm |
| 3* | < 10,000 ppm |
| 4* | < 10,000 ppm |
| 5* | < 10,000 ppm |
| 6* | > 1,000,000 ppm |
| 7* | < 10,000 ppm |
| 8* | > 1,000,000 ppm |
| 9 | > 1,000,000 ppm |

| | |
|---|---|
| * (Comparative) | |

The data in Tables 4 and 5 indicate that the samples which are compatible with anionic polymers are non-toxic while the compounds which are incompatible with anionic polymers are toxic.

### Example 4

Drilling fluids were prepared to test their effectiveness in a simulated drilling fluid system. Drilling fluids were prepared using common drilling fluid additives and three tests were conducted.

Drilling fluid # 1 contained 40 pounds per barrel bentonite clay in addition to other drilling fluid additives. After heat aging at 150°F., the viscosities were too high to measure, indicating an unusable drilling fluid due to hydration of the clays. Drilling fluid # 2 had 33.8 pounds per barrel of potassium chloride and 10 pounds per barrel prehydrated bentonite. Even without extra bentonite, the rheologies were higher than for drilling fluid # 3 which contained prehydrated bentonite as well as 40 pounds per barrel bentonite. The rheology tests for drilling fluid # 3 indicate that the trihydroxyalkyl quaternary amines prevented bentonite from swelling in a simulated drilling fluid system. The components of the three drilling fluids are provided below in Table 6.

**TABLE 6**

| Materials | Fluid 1 | Fluid 2 | Fluid 3 |
|---|---|---|---|
| 10 ppb Bentonite Slurry (prehydrated) | 152 ml | 152 ml | 152 ml |
| Seawater | 152 ml | 152 ml | 152 ml |
| Lube 167* | 7.0 ml | 7.0 ml | 7.0 ml |
| Sample 6*** | --- | --- | 8.0 ml |
| PAC-LV** | 1.5 g | 1.5 g | 1.5 g |
| KCl | --- | 33.8 g | --- |
| Barite | 60 g | 60 g | 60 g |
| KOH | 0.75 g | 0.75 g | 0.75 g |
| Xanthan Gum | 0.5 g | 0.5 g | 0.5 g |
| Bentonite | 40 g | --- | 40 g |

| | | | |
|---|---|---|---|
| *Drilling Fluid Lubricant marketed by M-I. | | | |
| **"AQUAFLO" from Aqualon Co. Aged 16 hours @ 150 F., Rolling | | | |
| *** (Comparative) | | | |

Table 7 below summarizes the rheology tests for the three drilling fluids.

**TABLE 7**

| Rheology | | | |
|---|---|---|---|
| RPM | Fluid 1 | Fluid 2 | Fluid 3 |
| 600 | * | 50 | 43 |
| 300 | * | 34 | 24 |
| 200 | * | 27 | 17 |
| 100 | * | 19 | 9 |
| 6 | * | 6 | 2 |
| 3 | * | 5 | 1 |
| | | | |
| PV, CP | * | 16 | 19 |
| YP, LB/100 sq ft | * | 18 | 5 |
| GELS, lb/100 sq ft | * | 4/13 | 2/4 |
| pH | | 8.2 | 8.0 |
| API F/L, ml | | 10.4 | 8.8 |

| | | | |
|---|---|---|---|
| * Viscosity too high to measure. | | | |

### Example 5

Drilling fluids were prepared to demonstrate the preparation of drilling fluid systems where the claimed inventions are used at high concentrations. The drilling fluids were prepared using common drilling fluid additives, which are previously described in this work. Table 8 lists the composition of Fluid A, which contains the claimed material choline chloride at a high concentration.

**TABLE 8**

| Composition of Fluid A | |
|---|---|
| Component | Quantity |
| Choline chloride (aq), 70% active | 246.4 ml |
| Barite | 200.0 g |
| Water | 60.0 ml |
| Xanthan gum biopolymer* | 0.4 g |
| PAC-LV** | 1.6 g |
| PHPA*** | 0.4 g |

| | |
|---|---|
| * "XCD" supplied by KELCO-Rotary, Division of Merck | |
| ** "AQUAFLO" supplied by Aqualon Co. | |
| *** "AF-207" supplied by Hychem Co. | |

Fluid A was prepared in the following manner. A one pint jar containing water was placed under a shaft-driven mixer capable of variable speed mixing. At a good rate of stirring the xanthan gum biopolymer, PAC-LV, and PHPA were added to the water and stirred for a total of 30 minutes at room temperature. The jar was then removed from the mixer, sealed, and dynamically heat aged in an oven at 150°F for 16 hours. After removal from the oven, the jar was placed under the mixer and the choline chloride (aq) was added while stirring at a good rate of shear, which continued for 15 minutes after the addition. The barite was added and the sample was stirred an additional 30 minutes to prepare a drilling fluid having a density of 12 pounds per gallon.

The data presented in Table 9 are for Fluid A, which was dynamically aged at 150°F for 16 hours after its complete preparation. The rheologies of Fluid A were measured at 120°F using a Model 35 Fann Viscometer.

**TABLE 9**

| Properties of Fluid A | |
|---|---|
| 600 rpm | 61 |
| 300 rpm | 34 |
| 200 rpm | 24 |
| 100 rpm | 14 |
| 6 rpm | 3 |
| 3 rpm | 2 |
| PV, CP | 27 |
| YP, lb/100 sq ft | 7 |
| 10 s Gel, lb/100 sq ft | 2 |
| 10 min Gel, lb/100 sq ft | 4 |
| pH | 7.5 |
| API Fluid Loss, ml | 3.2 |

The data in Table 9 show that effective drilling fluids, which have the desirable properties of good rheological control and excellent fluid loss control by the use of readily available drilling fluid additives, are easily prepared with high concentrations of materials claimed in this work.

## Claims

1. A water-base drilling fluid for use in drilling wells through a formation containing a clay which swells in the presence of water, said drilling fluid comprising:
(a) a weight material; and
(b) the reaction product of (i) a tertiary amine which is dimethylethanolamine and having the following formula: 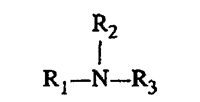
wherein both R₁ and R₂ are methyl groups, and R₃ is a hydroxyethyl group, with (ii) an alkyl halide of the following general formula
R―X
wherein R is a methyl group, and X is a halogen selected from chlorine, bromine, iodine, or combinations thereof, said reaction product being further **characterized by** (1) a low toxicity as assessed by the Mysid shrimp test, and (2) a compatibility with anionic drilling fluid components established by failing to yield a precipitant in the presence of anionic polymers, said reaction product being present in sufficient concentration to reduce the swelling of said clay.

2. The drilling fluid of claim 1, wherein X is chlorine.

3. The drilling fluid of claim 1, wherein said weight material is selected from barite, hematite, iron oxide, calcium carbonate, magnesium carbonate, and combinations thereof.

4. The drilling fluid of any of the preceding claims, wherein said reaction product is choline chloride.

5. The drilling fluid of any of the preceding claims, wherein said reaction product is present in an amount between about 2,513 and 50,266 kg/m³ (about 0.5 and 10 pounds per barrel).

6. A method of reducing the swelling of a clay in a well comprising circulating in the well a water-base drilling fluid comprising:
(a) a weight material; and
(b) a functionally effective concentration of an additive formed from the reaction product of (i) a tertiary amine which is dimethylethanolamine and having the following formula: 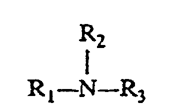
wherein both R₁ and R₂ are methyl groups, and R₃ is a hydroxyethyl group, with (ii) an alkyl halide of the following general formula
R―X
wherein R is a methyl group, and X is a halogen selected from chlorine, bromine, iodine, or combinations thereof, said reaction product being further **characterized by** (1) a low toxicity as assessed by the Mysid shrimp test, and (2) a compatibility with anionic drilling fluid components established by failing to yield a precipitant in the presence of anionic polymers, said reaction product being present in sufficient concentration to reduce the swelling of said clay.

7. The method of claim 6, wherein X is chlorine.

8. The method of claim 6, wherein said weight material is selected from barite, hematite, iron oxide, calcium carbonate, magnesium carbonate, and combinations thereof.

9. The method of any of claims 6 to 8, wherein said reaction product is choline chloride.

## Patentansprüche

1. Bohrspülung auf Wasserbasis zur Verwendung in Bohrlöchern durch eine Formation, die einen Ton enthält, der in Anwesenheit von Wasser quillt, wobei die Bohrspülung umfasst:
(a) ein Beschwerungsmaterial; und
(b) das Reaktionsprodukt von (i) einem tertiären Amin, bei dem es sich um Dimethylethanolamin handelt und welches die folgende Formel hat: 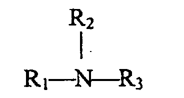
wobei sowohl R₁ als auch R₂ Methylgruppen sind und R₃ eine Hydroxyethylgruppe ist, mit (ii) einem Alkylhalogenid der folgenden allgemeinen Formel
R―X
wobei R eine Methylgruppe ist und X ein Halogen ausgewählt aus Chlor, Brom, Iod oder Kombinationen davon ist, wobei das Reaktionsprodukt weiterhin **gekennzeichnet ist durch** (1) eine niedrige Toxizität bei Bewertung **durch** den Mysid-Shrimps-Test und (2) eine Kompatibilität bzw. Verträglichkeit mit anionischen Bohrspülungskomponenten, **dadurch** nachgewiesen, dass es in Anwesenheit von anionischen Polymeren kein Fällungsmittel ergibt, wobei das Reaktionsprodukt in ausreichender Konzentration vorliegt, um das Quellen des Tons zu verringern.

2. Bohrspülung nach Anspruch 1, wobei X Chlor ist.

3. Bohrspülung nach Anspruch 1, wobei das Beschwerungsmaterial aus Baryt, Hämatit, Eisenoxid, Calciumcarbonat, Magnesiumcarbonat und Kombinationen davon ausgewählt ist.

4. Bohrspülung nach einem der vorhergehenden Ansprüche, wobei das Reaktionsprodukt Cholinchlorid ist.

5. Bohrspülung nach einem der vorhergehenden Ansprüche, wobei das Reaktionsprodukt in einer Menge zwischen etwa 2.513 und 50.266 kg/m³ (etwa 0,5 und 10 Pfund pro Barrel) vorliegt.

6. Verfahren zur Verringerung des Quellens von Ton in einem Bohrloch, wobei das Verfahren das Zirkulieren einer Bohrspülung auf Wasserbasis in dem Bohrloch umfasst, wobei die Bohrspülung umfasst:
(a) ein Beschwerungsmaterial; und
(b) eine funktionell wirksame Konzentration eines Addititvs, das aus dem Reaktionsprodukt eines (i) tertiären Amins, wobei es sich um Dimethylethanolamin handelt und welches die folgende Formel hat: 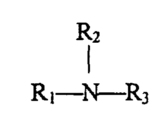
wobei sowohl R₁ als auch R₂ Methylgruppen sind und R₃ eine Hydroxyethylgruppe ist, mit (ii) einem Alkylhalogenid der folgenden allgemeinen Formel
R―X
wobei R eine Methylgruppe ist und X ein Halogen ausgewählt aus Chlor, Brom, Iod oder Kombinationen davon ist, gebildet ist, und wobei das Reaktionsprodukt weiterhin **gekennzeichnet ist durch** (1) eine niedrige Toxizität bei Bewertung **durch** den Mysid-Shrimps-Test und (2) eine Kompatibilität bzw. Verträglichkeit mit anionischen Bohrspülungskomponenten, **dadurch** nachgewiesen, dass es in Anwesenheit von anionischen Polymeren kein Fällungsmittel ergibt, wobei das Reaktionsprodukt in ausreichender Konzentration vorliegt, um das Quellen des Tons zu verringern.

7. Verfahren nach Anspruch 6, wobei X Chlor ist.

8. Verfahren nach Anspruch 6, wobei das Beschwerungsmaterial aus Baryt, Hämatit, Eisenoxid, Calciumcarbonat, Magnesiumcarbonat und Kombinationen davon ausgewählt wird.

9. Verfahren nach einem der Ansprüche 6 bis 8, wobei das Reaktionsprodukt Cholinchlorid ist.

## Revendications

1. Un fluide de forage à base d'eau utilisable pour forer de puits au travers d'une formation contenant une argile qui gonfle en présence d'eau, ledit fluide de forage comprenant :
a) un matériau pondéreux ; et
b) le produit de réaction de (i) une amine tertiaire qui est la diméthyléthanolamine et qui possède la formule suivante : 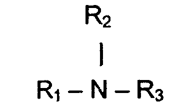
où R₁ et R₂ sont tous deux des groupes méthyle, et R₃ est un groupe hydroxyéthyle, avec (ii) un halogénure d'alkyle de formule générale suivante :
R-X
où R est un groupe méthyle, et X est un halogène choisi parmi le chlore, le brome, l'iode ou des combinaisons de ceux-ci, ledit produit de réaction étant en outre **caractérisé par** (1) une faible toxicité telle qu'évaluée par le test *Mysid shrimp* et (2) une compatibilité avec les constituants anioniques du fluide de forage en ne produisant pas de précipité en présence de polymères anioniques, ledit produit de réaction étant présent en une concentration suffisante pour réduire le gonflement de ladite argile.

2. Le fluide de forage de la revendication 1, dans lequel X est le chlore.

3. Le fluide de forage de la revendication 1, dans lequel ledit matériau pondéreux est choisi parmi la baryte, l'hématite, l'oxyde de fer, le carbonate de calcium, le carbonate de magnésium et des combinaisons de ceux-ci.

4. Le fluide de forage de l'une des revendications précédentes, dans lequel ledit produit de réaction est le chlorure de choline.

5. Le fluide de forage de l'une des revendications précédentes, dans lequel ledit produit de réaction est présent en une quantité comprise entre 2 513 et 50 266 kg/m³ (environ 0,5 et 10 livres par baril).

6. Un procédé de réduction du gonflement d'une argile dans un puits, comprenant la mise en circulation dans el puits d'un fluide de forage à base d'eau comprenant :
a) un matériau pondéreux ; et
b) une concentration fonctionnellement efficace d'un additif formé à partir du produit de réaction de (i) une aminé tertiaire qui est la diméthyléthanolamine et qui possède la formule suivante : 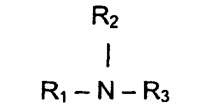
où R₁ et R₂ sont tous deux des groupes méthyle, et R₃ est un groupe hydroxyéthyle, avec (ii) un halogénure d'alkyle de formule générale suivante :
R-X
où R est un groupe méthyle, et X est un halogène choisi parmi le chlore, le brome, l'iode ou des combinaisons de ceux-ci, ledit produit de réaction étant en outre **caractérisé par** (1) une faible toxicité telle qu'évaluée par le test *Mysid shrimp* et (2) une compatibilité avec les constituants anioniques du fluide de forage en ne produisant pas de précipité en présence de polymères anioniques, ledit produit de réaction étant présent en une concentration suffisante pour réduire le gonflement de ladite argile.

7. Le procédé de la revendication 6, dans lequel X est le chlore.

8. Le procédé de la revendication 6, dans lequel ledit matériau pondéreux est choisi parmi la baryte, l'hématite, l'oxyde de fer, le carbonate de calcium, le carbonate de magnésium et des combinaisons de ceux-ci.

9. Le procédé de l'une des revendications 6 à 8, dans lequel ledit produit de réaction est le chlorure de choline.
